# EUROPÄISCHE PATENTSCHRIFT

(11) **EP 1 590 260 B1**
(45) Veröffentlichungstag und Bekanntmachung des Hinweises auf die Patenterteilung: **18.07.2007**
(21) Anmeldenummer: 04703172.9
(22) Anmeldetag: 19.01.2004
(51) Int. Cl.: B65D 77/20, B32B 27/08

(54) **WIEDERVERSCHLIESSBARE VERPACKUNG**
RECLOSABLE PACKAGING
EMBALLAGE REFERMABLE

(30) Priorität: 20.01.2003 DE 10302320
(43) Veröffentlichungstag der Anmeldung: 02.11.2005
(60) Teilanmeldung: 07009555.9
(73) Patentinhaber: Wipak Walsrode GmbH & Co. KG, 29656 Walsrode (DE)
(72) Erfinder: MATHY, Stefan, 10553 Berlin (DE); KAEDING-KOPPERS, Annett, 29683 Bad Fallingbostel (DE)
(74) Vertreter: Kutzenberger, Helga
(86) Internationale Anmeldenummer: PCT/EP2004/000365
(87) Internationale Veröffentlichungsnummer: WO 2004/065255

(56) Entgegenhaltungen:
- EP-A- 0 219 329
- EP-A- 1 138 610
- GB-A- 2 090 191
- US-A- 3 882 259
- US-A- 6 056 141
- US-B1- 6 302 290

## Beschreibung

Die vorliegende Erfindung betrifft eine wiederverschließbare Verpackung, die aus einer Verpackungsmulde zur Aufnahme des Füllguts, vorzugsweise einem Lebensmittel, und einem Deckel besteht, der über eine Siegelnaht im Randbereich der thermogeformten Verpackungsmulde mit der Verpackungsmulde verbunden ist, wobei die Verpackungsmulde eine Schicht aus einem Haftklebstoff und einer Migrationsbarriereschicht mit einer Schichtdicke < 2µm aufweist. Die Verpackung zeichnet sich insbesondere durch eine niedrige Globalmigration aus, wodurch eine Geschmacksbeeinträchtigung des verpackten Füllgutes und eine belästigende Geruchsentwicklung bei Lagerung des verpackten Füllgutes vermieden wird. Die erfindungsgemäße Verpackung ist wegen einer ausgezeichneten Öffnungs- und Wiederverschließbarkeit leicht zu handhaben.

Wiederverschließbare Verpackungen werden in zunehmendem Maße zur Verpackung von Produkten unterschiedlichster Art verwendet, um bei Entnahme eines Teils der verpackten Produkte ein Wiederverschließen und ein sachgerechtes Aufbewahren des nicht entnommenen Produkts zu gewährleisten. Diese Wiederverschließbarkeit von Verpackungen wird u. a. dadurch ermöglicht, dass das Verpackungsmaterial eine Schicht aus einem Haftklebstoff aufweist, die sich beim Öffnen der Verpackung im Siegelnahtbereich von den angrenzenden, verschweißten Siegelschichten ablöst, wodurch diese Schicht freigelegt und nach Entnahme eines Teils des Füllgutes ein Wiederverschließen durch Andrücken ermöglicht wird. Die durch das Versiegeln der Siegelschichten im Siegelnahtbereich erhaltene Verschlußanordung des mehrschichtigen Verpackungsmaterials hat nämliche eine größere Bindung zwischen den zum Verschließen der Verpackung versiegelten Siegelschichten von, z. B. Verpackungsmulde und Deckel, als zwischen der Haftklebstoffschicht und den mittelbar oder unmittelbar angrenzenden miteinander versiegelten Siegelschichten. Verpackungen dieser Art sind u. a. in der PCT-Anmeldung WO 97/19867 beschrieben.

Solche, notwendigerweise mit einer Schicht aus Haftklebstoff ausgerüstete Verpackungen, haben den Nachteil, dass niedermolekulare Bestandteile aus der Haftklebstoffschicht in das verpackte Lebensmittel migrieren können, was zu einer Geschmacksverschlechterung und ggf. zu gesundheitlichen Risiken bei Lagerung des verpackten Füllgutes führen kann. Zusätzlich kann sich ein belästigender Geruch in der Verpackung entwickeln, der beim Öffnen der Verpackung vom Verbraucher unangenehm wahrgenommen wird oder bereits bei der Herstellung der Verpackung zu Belästigungen führt.

Sofern in solchen wiederverschließbaren Verpackungen fetthaltige Produkte, insbesondere fetthaltige Lebensmittel flüssiger oder fester Art zu verpacken sind, verstärkt sich dieses Problem, da Fett in die Verpackung migriert und so die Migration der niedermolekularen Bestandteile des Haftklebstoffs begünstigt.

Zur weitgehenden Vermeidung der Migration von niedermolekularen Anteilen aus der im Verpackungsmaterial vorhandenen Haftklebstoffschicht wird in EP-A-1 138 610 empfohlen, die zur Herstellung von Schlauchbeutelverpackungen oder Verpackungsdeckel zum Einsatz kommenden Mehrschichtfolien mit einer Schicht aus Ethylen/vinylalkoholcopolymeren mit einer Dicke von ≥ 2 µm auszurüsten.

Gegenüber diesem Stand der Technik stellte sich daher die Aufgabe, eine wiederverschließbare Verpackung mit einer durch Thermoformung bzw. durch Tiefziehen hergestellte Verpackungsmulde mit einer ausgezeichneten Migrationsbarriere zur Verfügung zu stellen, die ein ausgezeichnetes Öffnen und Wiederverschließen der Verpackung erlaubt.

Erfindungsgemäß wird diese Aufgabe durch Bereitstellen einer wiederverschließbaren Verpackung für verschiedene Füllgüter, vorzugsweise Lebensmittel in fester, pastöser oder flüssiger Form, besonders bevorzugt fetthaltige Lebensmittel, gelöst, die aus
A) einem Deckel aus einer siegelbaren Mehrschichtfolie mit
   a') einer dem Füllgut zugewandten Siegelschicht und
   g') einer Trägerschicht und
B) einer Verpackungsmulde hergestellt aus einer siegelbaren Mehrschichtfolie mit
   a) einer dem Füllgut zugewandten Siegelschicht und
   g) einer Trägerschicht
   besteht,
wobei der Deckel A) mit der Verpackungsmulde B) über eine Siegelnaht im Randbereich der Verpackungsmulde B) verbunden ist,
dadurch gekennzeichnet, dass nur die Mehrschichtfolie, aus der die Verpackungsmulde B) durch Thermoformung hergestellt wurde, einen an die Siegelschicht a) unmittelbar anschließenden, vom Inneren der Verpackung nach außen gerichteten Schichtaufbau umfassend
b) eine Haftvermittlerschicht,
c) eine Migrationsbarriereschicht aus wenigstens 75 Gew% Ethylen/Vinylalkohol-Copolymerisat und einer Schichtdicke von < 2 µm und
f) eine Schicht aus einem Haftklebstoff
aufweist.

Überraschenderweise gelingt es durch eine so aufgebaute, erfindungsgemäße Verpackung die Globalmigration, insbesonders niedermolekulare Anteile, aus dem Verpackungsmaterial, insbesondere unter Einfluß von Fett, in den Innenraum der Verpackung auf weniger als 10 mg Globalmigrat/dm², vorzugsweise ≤ 7 mg Globalmigrat/dm², besonders bevorzugt ≤ 5 mg Globalmigrat/dm², zu begrenzen, wodurch eine Beeinträchtigung des Füllgutes durch Migration niedermolekularer Anteile aus dem Verpackungsmaterial, insbesondere aus der Haftklebstoffschicht f), in das Füllgut und eine unangenehme Geruchsbildung in der Verpackung vermieden wird. Diese Globalmigration wird nach DIN ENV 1186-14 bestimmt.

Erfindungsgemäß gelingt dies bereits mit Hilfe des vorstehend beschriebenen Aufbaus der Verpackungsmulde B), deren Migrationsbarriereschicht nur eine Dicke von < 2 µm, bevorzugt von 0,5 bis < 2 µm, besonders bevorzugt 0,7 bis 1,5 µm, aufzuweisen braucht.

Die Migrationsbarriereschicht c) ist aus wenigstens 75 Gew%, vorzugsweise 100 Gew%, Ethylen/Vinylalkohol-Copolymerisat aufgebaut, wobei das Copolymerisat, vorzugsweise aus 20 bis 60 Mol%, besonders bevorzugt aus 25 bis 42 Mol%, ganz besonders bevorzugt aus 30 bis 40 Mol% Ethylen, aufgebaut ist. Ebenso geeignet ist zur Herstellung der Migrationsbarriereschicht c) eine Mischung aus 75 bis 99 Gew% EthylenlVinylalkohol-Copolymerisat und 1 bis 25 Gew% Ethylen/Vinylacetat-Copolymerisat, vorzugsweise eine Mischung aus 80 bis 95 Gew% EthylenNinylalkohol-Copolymerisat und 5 bis 20 Gew% Ethylen/Vinylalkoholacetat-Copolymerisat. Dabei wird zur Herstellung einer solchen Mischung das vorstehend beschriebene Ethylen/Vinylalkohol-Copolymerisat eingesetzt und als EthylenNinylacetat-Copolymerisat, vorzugsweise ein Copolymerisat mit 2 bis 35 Mol% Vinylacetat.

Die Mehrschichtfolien, die zur Herstellung der beiden Teile der Verpackung verwendet werden, weisen jeweils eine Siegelschicht a) und eine Siegelschicht a') als Außenschicht auf, die dem Füllgut zugewandt ist. Zum Aufbau dieser Siegelschichten werden bevorzugt olefinische Homo- oder Copolymere, wie z. B. Polyolefine, vorzugsweise Polyethylene, Ethylencopolymerisate mit weiteren α-, β-ungesättigten Monomeren, vorzugsweise EthylenNinylacetat-Copolymerisate, oder Mischungen der genannten Polymeren verwendet. Als Polyethylene eigenen sich LDPE, HDPE, LLDPE, m-PE oder Mischungen der genannten Polymeren, ganz besonders bevorzugt LDPE Ethylen/Vinylacetatcopolymerisat oder deren Mischung. Der Schmelzindex der zum Einsatz kommenden Polymeren MFI (gemessen nach ASTM 1238 bei 2,16 kg und 190°C) sollte vorzugsweise mindestens 2 g/ 10 min, besonders bevorzugt 3,5 g/ 10 min betragen, um das angestrebte problemlose Öffnen und Wiederverschließen der erfindungsgemäßen Verpackung zu gewährleisten. Dazu kann es auch vorteilhaft sein, die Siegelschicht a) und/ oder die Siegelschicht a') mehrlagig zu gestalten, d. h. eine oder beide Siegelschichten aus mindestens 2 Lagen der genannten Polymeren, die vorzugsweise zu derselben Art Polymeren gehören und besonders bevorzugt auch dieselben physikalischen Eigenschaften aufweisen, aufzubauen.

Die Siegelschicht a') des Deckels A) ist vorzugsweise aus identischem Material aufgebaut wie die Siegelschicht a) der Verpackungsmulde B). Dies erleichtert die Einstellung der im Bereich der Siegelnaht angestrebten Siegelfestigkeit zwischen den Siegelschichten der Verpackungsmulde und des Deckel, die größer sein muß als die Verbundhaftung zwischen der Haftklebstoffschicht f) und der angrenzenden Migrationsbarriereschicht c) oder jeder dazwischen liegenden an die Schicht f) unmittelbar angrenzenden Schicht. So gelingt es beim ersten Öffnen der Verpackung, dass sich im Bereich der Siegelnaht diese genannte Schichtfolge (a) bis c) oder a) bis e) mit dem Deckel von der Verpackungsmulde löst, wodurch die Haftklebstoffschicht f) im Bereich der Siegelnaht freigegeben wird. Damit wird ein problemloses Wiederverschließen der Verpackung nach Entnahme zumindest eines Teils des verpackten Füllgutes durch Andrücken des Deckels im Siegelnahtbereich möglich.

Die Haftvermittlerschicht b) und die ggf. vorhandene Haftvermittlerschicht d) können aus allen bekannten polymeren Haftvermittlern aufgebaut sein, die zum Verbinden der Siegelschicht a) mit der Migrationsbarriereschicht c), bzw. der Klebstoffschicht f) bzw. der ggf. vorhandenen Schicht e) geeignet sind. Vorzugsweise ist die Haftvermittlerschicht bzw. sind die Haftvermittlerschichten im wesentlichen aus einem olefinischen Homo- oder Copolymerisat mit aufgepfropften Maleinsäureanhydrideinheiten aufgebaut. Vorzugsweise weisen die Polymeren, die zur Herstellung der Haftvermittlerschichten zum Einsatz kommen, einen Schmelzindex MFI (gemessen nach ASTM 1238 bei 2,16 kg / 190 °C) von mindestens 2 g/ 10 min, vorzugsweise 3,5 g/ 10 min, auf. Vorzugsweise ist zwischen der Migrationsbarriereschicht c) und der Haftklebstoffschicht f) eine Haftvermittlerschicht d) angeordnet, deren Zusammensetzung vorzugsweise der der Haftvermittlerschicht b) entspricht.

Sofern zwischen der Migrationsbarriereschicht c) und der Klebstoffschicht f) ggf. aus produktionstechnischen Gründen auch wenigstens eine Schicht e) aus mindestens einem olefinischen Homo- oder Copolymeren angeordnet ist, besteht diese vorzugsweise aus wenigsten einem Polyolefin, besonders bevorzugt aus Polyethylen oder Ethylencopolymerisat, besonders bevorzugt Ethylen/Vinylacetat-Copolymerisat mit vorzugsweise 2 bis 35 Mol% Vinylacetat oder aus einer Mischung der genannten Polymeren. Bevorzugt besteht diese Schicht e) aus LDPE, HDPE, LLDPE oder m-PE oder einer Mischung aus mindestens zwei der genannten Polyethylene oder mindestens einem genannten Polymeren mit einem EthylenNinylacetat-Copolymerisat, ganz besonders bevorzugt aus LDPE, Ethylen/Vinylacetat-Copolymerisat oder deren Mischung. Vorzugsweise ist der Schmelzindex MFI des polymeren Materials der Schicht e) mindestens 2 g/10 min, vorzugsweise 3,5 g/ 10 min, (gemessen nach ASTM 1238 bei 2,16 kg/ 190 °C). Vorzugsweise ist die Schicht e) ebenso wie die Siegelschicht a) und/ oder a') mehrlagig aufgebaut und weist dieselbe Art Polymeren auf. Vorzugsweise sind die Polymeren der Siegelschichten a) und a') identisch mit den Polymeren der Schicht e).

In einer weiterhin bevorzugten Ausführungsform ist die Teilschichtfolge a) bis e) symmetrisch in bezug auf die Migrationsbarriereschicht c) aufgebaut.

Die Schicht f) basiert auf einem Haftklebstoff. Diese Klebstoffe sind drucksensibel und insbesondere bei der Umgebungstemperatur fest. Dazu eignen sich polymere Haftklebstoffe auf Basis von Dispersionen von z. B. Acrylharzen oder Kautschuk oder als Hotmelts auf Basis von Styrol/Butadien-Blockcopolymeren oder Styrol/Isopren/Butadien-Blockcopolymeren oder als UV vernetzbare warm melts. Aufgrund der Haftklebeeigenschaften ist es auch möglich, nach dem ersten Öffnen der Verpackung die Verpackung durch Andrücken wieder zu verschließen und das verbleibende Füllgut ohne Beeinträchtigung durch die Umgebung weiter zu lagern.

Der Klebstoff der Schicht f) wird in einer solchen Menge aufgetragen, dass die Schichtdicke vorzugsweise im Bereich von 1 bis 40 µm, besonders bevorzugt 10 bis 25 µm, ganz besonders bevorzugt 15 bis 22 µm, liegt.

Die Gesamtdicke der jeweils vorhandenen Schichtfolge a) bis e) bzw. a') bis e) liegt vorzugsweise im Bereich von 15 bis 70 µm, vorzugsweise besonders bevorzugt 20 bis 50 µm, ganz besonders bevorzugt im Bereich von 25 bis 40 µm, wobei die Schicht a) bzw. a') und die ggf. vorhandene Schicht e), vorzugsweise jeweils 5 bis 15 µm und die Haftvermittlerschicht b) und die ggf. vorhandene Haftvermittlerschicht d), vorzugsweise jeweils eine Schichtdicke im Bereich von 3 bis 6 µm, aufweisen sollen.

An die Klebstoffschicht f) schließt eine vorzugsweise die Außenseite der Verpackung, insbesondere der Verpackungsmulde B) bildende Trägerschicht g) an, die auf einem thermoplastischen Material, wie einem thermoplastischen Kunststoff, vorzugsweise einem Polyester, einem Polyolefin oder Polyamid basiert. Als thermoplastische Polyester kommen insbesondere geschäumte oder amorphe Polyester, vorzugsweise Polyethylenterephthalat, als Polyolefine, Polyethylen oder Polypropylen oder deren Copolymere, als Polyamide Polyamid 6,6, ganz besonders bevorzugt amorphe Polyester, in Frage. Bevorzugt ist der Einsatz von transparenten Materialien. Die Dicke der Trägerschicht kann in einem weiten Bereich variieren und hängt u. a. davon ab, welchen mechanischen Belastungen die Verpackung ggf. im Gebrauch unterworfen ist, ohne das dabei die Thermoverformbarkeit der erfindungsgemäß zum Einsatz kommenden Mehrschichtfolie erkennbar beeinträchtigt wird. Vorzugsweise weist die Trägerschicht eine Dicke auf, die mindestens der Gesamtdicke der Schichtfolge a) bis f) entspricht, vorzugsweise aber ein Vielfaches ist.

Als Trägerschicht g') der Deckelfolie wird vorzugsweise ein thermoplastischer Kunststoff, wie z. B. ein Polyolefin, vorzugsweise Polyethylen, Polypropylen oder deren Copolymere, ein Polyester, geschäumt oder amorph, vorzugsweise Polyethylenterephthalat, oder ein Polyamid, vorzugsweise PA 6,6. Bevorzugt sind transparente Materialien. Geeignete Trägerschichten können auch längs- oder biaxial gereckt sein, um entsprechende physikalische Eigenschaften wie Festigkeiten einzustellen. Die Dicke der Trägerschicht beträgt vorzugsweise mindestens 25 µm.

Vorzugsweise beträgt das Verhältnis der Dicke der Migrationsbarriereschicht c) zur Gesamtdicke der Mehrschichtfolie der Verpackungsmulde B) 1:1000 bis 1:25, vorzugsweise 1:100 bis 1:30.

Sowohl die Trägerschicht g) der Verpackungsmulde B) als auch die Trägerschicht g') des Deckels A) können mehrlagig aufgebaut sein. Die Verpackungsmulde B) und/oder der Deckel A) können bedruckt und/oder eingefärbt sein.

Vorzugsweise ist die gesamte erfindungsgemäße Verpackung transparent.

Nur der Teil der Verpackung, d. h. die Verpackungsmulde, der die Schicht c) aus Haftklebstoff aufweist, ist auch mit der erfindungsgemäß zum Einsatz kommenden Migrationsbarriereschicht c) ausgestattet.

Zur Herstellung der erfindungsgemäßen Verpackungen können das Material für die Verpackungsmulde und das Material für den Deckel nach unterschiedlichen Fertigungsprozessen hergestellt werden. Dabei kann die Mehrschichtfolie, aus der die Verpackungsmulde B) durch Thermoverformung, besonders bevorzugt durch Tiefziehen, hergestellt wird, nach allen bekannten Prozessen zur Herstellung von Mehrschichtfolien produziert werden. Dies gilt auch für die Mehrschichtfolie des Deckels. Vorzugsweise bietet sich ein Coextrusionsverfahren an, bei dem die Polymeren der einzelnen Schichten, ggf. mit den gewünschten Additiven dotiert, in geschmolzener Form durch eine gemeinsame Mehrfachdüse extrudiert werden. Die Coextrusion kann so durchgeführt werden, dass dabei eine Mehrschichtfolie auf einer Flachfolienanlage produziert wird oder die Produktion nach einem Schlauchfoliencoextrusionsprozess erfolgt. Es ist auch möglich einen Teil der erfindungsgemäß zum Einsatz kommenden Mehrschichtfolie durch Coextrusion zu erzeugen und diese Teilschichtfolge durch kalandrieren über eine Haftvermittlerschicht mit dem verbleibenden Schichten, der erfindungsgemäß zum Einsatz kommenden Mehrschichtfolie, zu verbinden. Es ist auch möglich die Schichtfolge a) bis e) in einem separaten Coextrusionsprozess herzustellen und vorzugsweise inline mit der mit Klebstoff beschichteten Trägerschicht zusammenzuführen. Ebenso ist es möglich, diese Schichtfolge mit einer die Haftklebstoffschicht f) tragenden Trägerschicht über eine extrudierte Bindungsschicht zu verbinden.

Zum Verformen der Mehrschichtfolie zu der Verpackungsmulde B) wird diese Folie, vorzugsweise mit Hilfe einer Tiefziehanlage, thermoverformt und inline befüllt und nach Zulauf der Deckelfolie zur der erfindungsgemäßen Verpackung versiegelt.

Dabei wird der Siegeldruck und die Siegeltemperatur so eingestellt, dass die Siegelfestigkeit zwischen der Siegelschicht a) der Verpackungsmulde B) und der Siegelschicht a') des Deckels A) im Siegelnahtbereich fester ist als die Bindekraft zwischen der Haftklebstoffschicht f) und der jeweils angrenzenden a) bis e) bzw. c). Da als Siegelschichtmaterialien für die Schicht a) bzw. a') ähnliche, wenn nicht sogar vorzugsweise identische Materialien gewählt werden, ist diese Bedingung im allgemeinen durch einfache Vorversuche zu erfüllen. Sie bewirkt, dass beim ersten Öffnen der Verpackung im Siegelnahtbereich die Klebstoffschicht f), die im Aufbau der Verpackungsmulde vorhanden ist, freigegeben wird, wodurch ein problemloses Wiederverschließen zur einwandfreien, weiteren Lagerung des verbleibenden Füllgutes möglich wird.

Die erfindungsgemäßen Verpackungen eigenen sich insbesondere als Verpackungen für Lebensmittel, die fetthaltig sind, wie z. B. Käse, Wurst, Schinken, Kuchen, Süßigkeiten, Fleischwaren.

Die erfindungsgemäßen Verpackungen zeichnen sich aber nicht nur durch eine drastisch verringerte Migration, insbesondere unter Fetteinwirkung, in die Verpackung bzw. das verpackte Füllgut aus, sondern auch durch eine einfache und leichte Handhabung beim Öffnen und Wiederverschließen der Verpackung, die ohne große Kraftanstrengung zu einem sauberen Abtrennen der an die Haftklebstoffschicht f) angrenzenden Schichten und damit ein Freilegen der Klebstoffschicht führt.

### I. Meßmethoden

Die Globalmigration wird nach DIN ENV 1186-14 gemessen, in dem die zu untersuchende haftklebstoffhaltige Mehrschichtfolie 5 Tage lang bei 23°C i-Octan-Einfluß ausgesetzt wird. Dazu wird ein kreisförmiger Prüfling aus der zu testenden Mehrschichtfolie mit der Siegelschicht a) bzw. a') in einseitigen Kontakt mit dem Simulanz in der Migrationszelle gebracht und das Globalmigrat, d. h. das Migrat aus der Folie in das Simulanz (i-Octan), nach einer Kontaktzeit von 5 Tagen bei 23 °C (3-fache Messung) durch Abdampfen des i-Octans und Auswiegen des Rückstandes gravimetrisch bestimmt.

### II. Geruchsprüfung bzw. Geschmacksprüfung

Aus den zu testenden Mehrschichtfolien mit einem Schichtaufbau a) bis g) wurden auf einer Tiefziehmaschine identische Verpackungsmulden mit den Dimensionen 180 mm x 110 mm x 30 mm (Länge x Bereit x Tiefe) hergestellt und immer mit einer identischen Deckelfolie versiegelt. Ebenso wurde aus Mehrschichtfolie, die keine Schicht f) und damit Migrationsbarriereschicht c) aufweist, solche Verpackungsmulden hergestellt. Diese wurden mit einer Deckelfolie, deren Aufbau eine Schicht c) und f) umfaßt, durch Versiegeln verschlossen. Die Verpackungen wurden 5 Tage bei 23 °C und 50 % relativer Feuchtigkeit gelagert. Zur Bewertung der Geruchsentwicklung in einer Verpackung wurden jeweils 10 Testpersonen um die Beurteilung des Geruchs im Inneren der Verpackung nach der genannten Lagerung beauftragt. Dazu wurden von jeder Sorte der gelagerten Verpackungen 10 Stück an einer Ecke aufgeschnitten und der Geruch im Inneren der Verpackung durch Schnüffeln überprüft. Die Testpersonen bewerteten den Geruch mit Schulnoten von 1 bis 4, wobei 1 für sehr gut (geruchsfrei) und 4 für schlechten bzw. intensivsten Geruch steht. Diese Benotung wurde jeweils gemittelt.

Da die Geruchsentwicklung mit der Geschmacksbeeinträchtigung korreliert, bedeutet dies, dass die Geschmackseinträchtigung des Füllgutes in der Verpackung um so größer ist, je intensiver der festgestellte Geruch ist.

### Beispiele:

### Beispiel 1

Auf einer Coextrusionsanlage wurde eine Teilschichtfolge aus einer Siegleschicht a), bestehend aus 2 Lagen, jeweils 5,1 µm dick, aus LDPE (low density polyethylene) mit einem MFI von 2,5 g/ 10 min, einer Haftvermittlerschicht b) mit einer Dicke von 2,1 µm aus Polyethylen mit aufgepfropften Maleinsäureanhydrideinheiten und einem MFI von 4 g/ 10 min, einer Migrationsbarriereschicht c) mit einer Dicke von 1,8 µm aus einem EthylenNinylalkohol-Copolymerisat mit 38 Mol% Ethylen, einer Haftvermittlerschicht d) mit einer Dicke von 2,1 µm aus dem Material der Schicht b) und einer mehrlagigen Schicht e), die aus einer 5,1 µm dicken Lage aus 50 Gew% EthylenNinylacetat-Coplymerisat mit 5 Mol% Vinylacetat und 50 Gew% LLDPE, einer 3,9 µm dicken Lage aus 50 Gew% Ethylen/Vinylacetat-Coplymerisat mit 5 Mol% Vinylacetat und 50 Gew% LLDPE und einer 3,6 µm dicken Lage aus 63 Gew% LLDPE und 37 Gew% LDPE bestand. Diese Teilschichtfolge wurde mit einer Trägerschicht g) aus amorphen Polyethylenterephthalat mit einer Dicke von 300 µm, die mit einem Haftklebstoff, hot melt HM 570 der Firma Fuller, Deutschland, mit einer Dicke von 20 µm beschichtet war, verbunden.

Bevor aus dieser Mehrschichtfolie eine Verpackungsmulde durch Tiefziehen hergestellt wurde, wurde von der Mehrschichtfolie die Globalmigration nach der vorstehend beschriebenen Methode gemessen, die ein Globalmigrat von 2,7 mg/dm² ergab.

Aus der beschriebenen Mehrschichtfolie wurde auf einer Form-, Füll- und Siegelanlage durch Tiefziehen eine Verpackungsmulde mit den Dimensionen 180 mm x 110 mm x 30 mm (Länge x Breite x Tiefe) hergestellt und inline mit einer Mehrschichtfolie als Deckel aus einer Trägerschicht g') aus biaxial gereckten Polyprophylen mit einer Dicke von 50 µm und einer zweilagigen Siegelschicht a') aus jeweils 10,1 µm LDPE, hergestellt durch Coextrusion, durch Versiegeln am Rand der Verpackungsmulde verschlossen.

Nach der vorstehend angegebenen Methode wurde der Geruchstest durchgeführt der eine Benotung von 2 ergab. Das Öffnungsverhalten gemäß einer Skala 1 (gut), 2 (mittel) und 3 (schlecht) wurde mit 2,1 bewertet. Der Wert für das Öffnungsverhalten wird mit 10 Testpersonen ermittelt und gemittelt. Dieselbe Gruppe an Testpersonen bewertete das Öffnen und Wiederschließen, das sich einwandfrei mehr als 10 mal durchführen ließ.

### Beispiel 2

Durch Coextrusion wurde eine Teilschichtfolge aus einer Siegelschicht a) mit einer Dicke von 10 µm aus m-PE mit einem MFI von 3 g/ 10 min, einer Haftvermittlerschicht b) mit einer Dicke von 3 µm bestehend aus einem Polyethylen mit aufgepfropften Maleinsäureanhydrideinheiten mit einem MFI von 3,1 g/ 10 min, einer Migrationsbarriereschicht c) mit einer Dicke von 1 µm aus EthylenlVinylalkohol-Copolymerisat mit 38 Mol% Ethylen, einer Haftvermittlerschicht d) mit einer Dicke von 3 µm und identischem Aufbau wie die Haftvermittlerschicht b) und einer Schicht e) mit einer Dicke von 10 µm aus m-PE mit einem MFI von 3 g/ 10 min, hergestellt.

Diese Teilschichtfolge wurde mit einer Trägerschicht g) aus amorphen Polyethylenterephthalat mit einer Dicke von 300 µm die mit einem Haftklebstoff, hot melt HM 570 der Firma Fuller, Deutschland, in einer Dicke von 15 µm beschichtet war, verbunden. Von dieser so erhaltenen Mehrschichtfolie wurde nach der vorstehend angegebenen Methode, die Globalmigration bestimmt. Der Wert für das Globalmigrat betrug 2,4 mg/ dm².

Aus der Mehrschichtfolie wurden Verpackungsmulden, wie im Beispiel 1 beschrieben, hergestellt, die mit einer Deckelfolie aus einer Trägerschicht g') aus biaxial gerecktem Polypropylen mit einer Schichtdicke von 50 µm und einer Siegelschicht a') mit einer Dicke von 15 µm und bestehend aus m-PE mit einem MFI von 3g/ 10 min durch Versiegeln am Rand der Verpackungsmulde verschlossen. Von solchen Verpackungen wurde nach der vorstehend angegebenen Methode der Geruch bestimmt, der mit 1,6 bewertet wurde. Ebenso wurde das, wie im Beispiel 1 angegeben, Öffnungsverhalten mit 1,9 und die Wiederverschließbarkeit mit > 10 bewertet.

### Vergleichsbeispiel 1

Eine Trägerschicht g) mit einer Dicke von 300 µm aus amorphen Polyethylenterephthalat, die mit einem Haftklebstoff entsprechend Beispiel 2 mit einer Dicke von 15 µm beschichtet war, wurde mit einer Siegelschicht a) mit einer Dicke von 20 µm aus m-PE mit einem MFI von 3 g/10 min, entsprechend der Siegelschicht a) im Beispiel 2, verbunden. Von dieser Mehrschichtfolie wurde das Globalmigrat mit 57 mg/ dm² entsprechend der vorstehend angegebenen Methode bestimmt.

Von dieser Mehrschichtfolie wurden, wie im Beispiel 1 angegeben, Verpackungsmulden hergestellt, die mit einer Deckelfolie mit einem identischen Aufbau wie im Beispiel 2 verschlossen wurde. Die Bestimmung des Geruchs nach der vorstehend angegebenen Methode betrug 3,5, das Wiederverschließ- bzw. Öffnungsverhalten entsprach dem vom Beispiel 2.

### Beispiel 3 (Referenzbeispiel)

Durch Coextrusion wurde eine Teilschichtfolge aus einer Siegelschicht a') mit einer Dicke von 10 µm aus m-PE mit einem MFI von 3 g/ 10 min, einer Haftvermittlerschicht b) mit einer Dicke von 3 µm bestehend aus einem Polyethylen mit aufgepfropften Maleinsäureanhydrideinheiten mit einem MFI von 3,1 g/ 10 min, einer Migrationsbarriereschicht c) mit einer Dicke von 1 µm aus EthylenNinylalkohol-Copolymerisat mit 38 Mol% Ethylen, einer Haftvermittlerschicht d) mit einer Dicke von 3 µm und identischen Aufbau wie die Haftvermittlerschicht b) und einer Schicht e) mit einer Dicke von 10 µm aus m-PE mit einem MFI von 3 g/ 10 min hergestellt.

Diese Teilschichtfolge wurde mit einer biaxial gereckten Trägerschicht g') aus Polyethylenterephthalat mit einer Dicke von 36 µm, die mit einem Haftklebstoff, hotmelt HM 570 der Firma Fuller, Deutschland, in einer Dicke von 10 µm beschichtet war, verbunden. Von dieser so erhaltenden Mehrschichtfolie wurde nach der vorstehend angegebenen Methode die Globalmigration bestimmt. Der Wert für das Globalmigrat betrug 2,4 mg/ dm². Diese Mehrschichtfolie diente als Deckelfolie.

Aus einer Mehrschichtfolie aus einer Trägerschicht g) aus amorphen Polyethylenterephthalat und einer Dicke von 300 µm verbunden mit einer Siegelschicht a) aus m-PE und einer Dicke von 40 µm wurden, wie im Beispiel 1 angegeben, Verpackungsmulden hergestellt, die mit der vorstehend beschriebenen Deckelfolie durch Versiegeln am Randbereich der Verpackungsmulde verschlossen wurden. Die Bestimmung des Geruchs nach der vorstehend angegebenen Methode betrug 1,5, das Öffnungsverhalten wurde mit 1,5 und die Wiederverschließbarkeit mit > 10 bewertet.

### Beispiel 4

Durch Coextrusion wurde eine Teilschichtfolge aus einer Siegelschicht a) mit einer Dicke von 10 µm aus einer Mischung von 50 Gew% LDPE und 50 Gew% LLDPE mit einem MFI von 3 g/10 min, einer Haftvermittlerschicht b) mit einer Dicke von 3 µm bestehend aus einem Polyethylen mit aufgepfropften Maleinsäureanhydrideinheiten mit einem MFI von 3,1 g/10 min, einer Migrationsbarriereschicht c) mit einer Dicke von 1 µm aus einer Mischung bestehend aus 80 Gew% Ethylen/Vinylalkohol-Copolymerisat mit 38 Mol% Ethylen und 20 Gew% eines Ethylen/Vinylacetat-Copolymerisats mit 4,5 Mol% Vinylacetat, einer Haftvermittlerschicht d) mit einer Dicke von 3 µm und identischen Aufbau wie die Haftvermittlerschicht b) und einer Schicht e) mit einer Dicke von 10 µm aus einer Mischung aus 50 Gew% LDPE und 50 Gew% LLDPE mit einem MFI von 3 g/10 min hergestellt.

Diese Teilschichtfolge wurde mit einer Trägerschicht g) aus amorphen Polyethylenterephthalat mit einer Dicke von 300 µm, die mit einem Haftklebstoff, hot melt HM 570 der Firma Fuller, Deutschland, in einer Dicke von 15 µm beschichtet war, verbunden. Von dieser so erhaltenen Mehrschichtfolie wurde nach der vorstehend angegebenen Methode die Globalmigration bestimmt. Der Wert für das Globalmigrat betrug 2,9 mg/ dm².

Aus der Mehrschichtfolie wurden Verpackungsmulden, wie im Beispiel 1 beschrieben, hergestellt, die mit einer Deckelfolie aus einer Trägerschicht g') aus biaxial gerecktem Polyprophylen mit einer Schichtdicke von 50 µm und einer Siegelschicht a') mit einer Dicke von 15 µm bestehend aus einer Mischung von 50 Gew% LLDPE und 50 Gew% LDPE mit einem MFI von 3 g/ 10 min durch Versiegeln am Rand der Verpackungsmulde verschlossen wurden. Von solchen Verpackungen wurde nach der vorstehend angegebenen Methode der Geruch bestimmt, der mit 1,8 bewertet wurde. Ebenso wurde das, wie im Beispiel 1 angegeben, Öffnungsverhalten mit 2 und die Wiederverschließbarkeit mit > 10 bewertet.

## Patentansprüche

1. Wiederverschließbare Verpackung für verschiedene Güter, vorzugsweise Lebensmittel, bestehend aus
A) einem Deckel aus einer siegelbaren Mehrschichtfolie mit
a') einer dem Füllgut zugewandten Siegelschicht und
g') einer Trägerschicht
und
B) einer Verpackungsmulde hergestellt aus einer siegelbaren Mehrschichtfolie
mit
a) einer dem Füllgut zugewandten Siegelschicht und
g) einer Trägerschicht,
wobei der Deckel A) mit der Verpackungsmulde B) über eine Siegelnaht im Randbereich der Verpackungsmulde B) verbunden ist,
**dadurch gekennzeichnet, dass** nur die Mehrschichtfolie, aus der die Verpackungsmulde B) durch Thermoformung hergestellt wurde, einen an die Siegelschicht a) unmittelbar anschließenden, vom Inneren der Verpackung nach außen gerichteten Schichtaufbau umfassend
b) eine Haftvermittlerschicht,
c) eine Migrationsbarriereschicht aus wenigstens 75 Gew% Ethylen/Vinylalkohol-Copolymerisat und einer Schichtdicke < 2 µm und
f) eine Schicht aus einem Haftklebstoff aufweist.

2. Verpackung nach Anspruch 1, **dadurch gekennzeichnet, dass** zwischen der Migrationsbarriereschicht c) und der Haftklebstoff-Schicht f) eine an die Schicht c) anschließende
d) weitere Haftvermittlerschicht und/ oder
e) wenigstens eine Schicht aus olefinischen Homo- oder Copolymeren angeordnet ist.

3. Verpackung nach Anspruch 1 oder 2, **dadurch gekennzeichnet, dass** die Migrationsbarriereschicht c) aus Ethylen/Vinylalkohol-Copolymerisat besteht.

4. Verpackung nach Anspruch 1 oder 2, **dadurch gekennzeichnet, dass** die Migrationsbarriereschicht c) aus einer Mischung aus 75 bis 99 Gew% EthylenNinylalkohol-Copolymerisat und 1 bis 25 Gew% EthylenNinylacetat-Copolymerisat besteht.

5. Verpackung nach Anspruch 4, **dadurch gekennzeichnet, dass** die Migrationsbarriereschicht c) aus einer Mischung aus 80 bis 95 Gew% EthylenNinylalkohol-Copolymerisat und 5 bis 20 Gew% EthylenNinylacetat-Copolymerisat besteht.

6. Verpackung nach Anspruch 4 oder 5, **dadurch gekennzeichnet, dass** das Ethylen/Vinylacetat-Copolymerisat aus 2 bis 35 Mol% Vinylacetat aufgebaut ist.

7. Verpackung nach einem der Ansprüche 1 bis 6, **dadurch gekennzeichnet, dass** die Dicke der Migrationsbarriereschicht c) 0,5 bis < 2 µm, vorzugsweise 0,7 bis 1,5 µm beträgt.

8. Verpackung nach einem der Ansprüche 1 bis 7, **dadurch gekennzeichnet, dass** die Verpackungsmulde B aus der Mehrschichtfolie durch Tiefziehen hergestellt wurde.

9. Verpackung nach einem der Ansprüche 2 bis 8, **dadurch gekennzeichnet, dass** die Gesamtdicke der Schichtfolge a) bis e) 15 bis 70 µm, vorzugsweise 20 bis 50 µm, besonders bevorzugt 25 bis 40 µm, beträgt.

10. Verpackung nach einem der Ansprüche 1 bis 9, **dadurch gekennzeichnet, dass** das Verhältnis der Dicke der Migrationsbarriereschicht c) zur Gesamtdicke der Mehrschichtfolie 1:1000 bis 1:25, vorzugsweise 1:100 bis 1:30 beträgt.

11. Verpackung nach einem der Ansprüche 1 bis 10, **dadurch gekennzeichnet, dass** sowohl die Siegelschicht a) als auch die Siegelschicht a'), gleich oder verschieden, als Polymerkomponente wenigstens ein Polyolefin, vorzugsweise Polyethylen, wenigstens ein Ethylencopolymerisat, vorzugsweise ein EthylenNinylacetat-Copolymerisat oder, ein Mischung der genannten Polymeren aufweist.

12. Verpackung nach Anspruch 11, **dadurch gekennzeichnet, dass** die Siegelschichten a) und a') als Polymerkomponente LDPE, HDPE, LLDPE, m-PE, ganz besonders bevorzugt LDPE, Ethylen/Vinylacetat-Copolymerisat oder deren Mischung aufweisen.

13. Verpackung nach Anspruch 11 oder 12, **dadurch gekennzeichnet, dass** die Polymerkomponente der Siegelschicht a') identisch mit der Polymerkomponente der Siegelschicht a) ist.

14. Verpackung nach einem der Ansprüche 1 bis 13, **dadurch gekennzeichnet, dass** die Schicht f) als Haftklebstoff einen Haftklebstoff auf Dispersionsbasis, als hot melt oder UV vernetzbares warm melt aufweist.

15. Verpackung nach einem der Ansprüche 2 bis 14, **dadurch gekennzeichnet, dass** die Schicht e) aus wenigstens einem Poylolefin, vorzugsweise einem Polyethylen oder einem Ethylencopolymerisat, vorzugsweise einem EthylenNinylacetat-Copolymerisat, oder aus einer Mischung der genannten Polymeren aufgebaut ist.

16. Verpackung nach Anspruch 15, **dadurch gekennzeichnet, dass** die Schicht e) aus LDPE, HDPE, LLDPE oder m-PE, oder einer Mischung aus mindestens 2 der genannten Polyethylene oder einer Mischung aus mindestens einem der genannten Polymeren mit Ethylen/Vinylacetat-Copolymerisat, bevorzugt aus LDPE, Ethylen/Vinylacetat Copolymerisat oder deren Mischung, aufgebaut ist.

17. Verpackung nach einem der Ansprüche 2 bis 16, **dadurch gekennzeichnet, dass** die Teilschichtfolge a) bis e) symmetrisch in bezug auf die Migrationsbarriereschicht c) aufgebaut ist.

18. Verpackung nach Anspruch 17, **dadurch gekennzeichnet, dass** die Schichten a), a') und e) bzw. b) und d) jeweils aus derselben Art Kunststoff aufgebaut sind.

19. Verpackung nach einem der Ansprüche 1 bis 18, **dadurch gekennzeichnet, dass** die Trägerschichten g) und g'), gleich oder verschieden, jeweils aus einem thermoplastischen Kunststoff, vorzugsweise Polyester, Polyolefin oder Polyamid bestehen.

20. Verpackung nach Anspruch 19, **dadurch gekennzeichnet, dass** die Trägerschichten g) und g'), gleich oder verschieden, aus geschäumten oder amorphen Polyester, vorzugsweise Polyethylenterephthalat, aus Polyethylen oder Polypropylen bestehen.

21. Verpackung nach Anspruch 19 oder 20, **dadurch gekennzeichnet, dass** die Trägerschicht g') der Mehrschichtfolie als Deckel A) mindestens längs gereckt, vorzugsweise biaxial gereckt, ist.

22. Verpackung nach einem der Ansprüche 1 bis 21, **dadurch gekennzeichnet, dass** die Verpackung zumindest einem transparenten Deckel A) aufweist, vorzugsweise insgesamt transparent ist.

## Claims

1. Reclosable packaging for various goods, preferably food or drink, composed of
A) a lid composed of a sealable multilayer film with
a') a sealable layer facing towards the contents and
g') a backing layer
and
B) a packaging tray produced from a sealable multilayer foil
with
a) a sealable layer facing towards the contents and
g) a backing layer,
where the lid A) has been bonded to the packaging tray B) by way of a seal seam in the flange region of the packaging tray B),
**characterized in that** only the multilayer film of which the packaging tray B) was produced via thermoforming has a layer structure which is immediately adjacent to the sealable layer a) and which comprises, in the direction from the interior of the packaging outwards
b) an adhesive layer,
c) a migration-barrier layer comprising at least 75% by weight of ethylene-vinyl alcohol copolymer, the thickness of the layer being < 2 µm and
f) a layer comprising a pressure-sensitive adhesive.

2. Packaging according to Claim 1, **characterized in that** between the migration-barrier layer c) and the pressure-sensitive adhesive layer f), adjacent to the layer c),
d) a further adhesive layer and/or
e) at least one layer comprising olefinic homo- or copolymers
is arranged.

3. Packaging according to Claim 1 or 2, **characterized in that** the migration-barrier layer c) is composed of ethylene-vinyl alcohol copolymer.

4. Packaging according to Claim 1 or 2, **characterized in that** the migration-barrier layer c) is composed of a mixture of from 75 to 99% by weight of ethylene-vinyl alcohol copolymer and from 1 to 25% by weight of ethylene-vinyl acetate copolymer.

5. Packaging according to Claim 4, **characterized in that** the migration-barrier layer c) is composed of a mixture of from 80 to 95% by weight of ethylene-vinyl alcohol copolymer and from 5 to 20% by weight of ethylene-vinyl acetate copolymer.

6. Packaging according to Claim 4 or 5, **characterized in that** the ethylene-vinyl acetate copolymer is composed of from 2 to 35 mol% of vinyl acetate.

7. Packaging according to any of Claims 1 to 6, **characterized in that** the thickness of the migration-barrier layer c) is from 0.5 to < 2 µm, preferably from 0.7 to 1.5 µm.

8. Packaging according to any of Claims 1 to 7, **characterized in that** the packaging tray B has been produced from the multilayer film by deep drawing.

9. Packaging according to any of Claims 2 to 8, **characterized in that** the total thickness of the layer sequence a) to e) is from 15 to 70 µm, preferably from 20 to 50 µm, particularly preferably from 25 to 40 µm.

10. Packaging according to any of Claims 1 to 9, **characterized in that** the ratio of the thickness of the migration-barrier layer c) to the total thickness of the multilayer film is from 1:1000 to 1:25, preferably from 1:100 to 1:30.

11. Packaging according to any of Claims 1 to 10, **characterized in that** not only the sealable layer a) but also the sealable layer a'), identical or different, contains as polymer component at least one polyolefin, preferably polyethylene, at least one ethylene copolymer, preferably an ethylene-vinyl acetate copolymer, or a mixture of these polymers mentioned.

12. Packaging according to Claim 11, **characterized in that** the sealable layers a) and a') contain as polymer component LDPE, HDPE, LLDPE, m-PE, very particularly preferably LDPE, ethylene-vinyl acetate copolymer or a mixture of these polymers.

13. Packaging according to Claim 11 or 12, **characterized in that** the polymer component of the sealable layer a') is identical with the polymer component of the sealable layer a).

14. Packaging according to any of Claims 1 to 13, **characterized in that** the layer f) contains as pressure-sensitive adhesive a dispersion-based pressure-sensitive adhesive, in the form of hot melt or UV-crosslinkable warm melt.

15. Packaging according to any of Claims 2 to 14, **characterized in that** the layer e) is composed of at least one polyolefin, preferably a polyethylene or an ethylene copolymer, preferably an ethylene-vinyl acetate copolymer, or of a mixture of the polymers mentioned.

16. Packaging according to Claim 15, **characterized in that** the layer e) is composed of LDPE, HDPE, LLDPE or m-PE, or of a mixture composed of at least two of the polyethylenes mentioned or of a mixture composed of at least one of the polymers mentioned with ethylene-vinyl acetate copolymer, preferably of LDPE, ethylene-vinyl acetate copolymer, or a mixture of these.

17. Packaging according to any of Claims 2 to 16, **characterized in that** the partial layer sequence a) to e) has a symmetrical structure with respect to the migration-barrier layer c).

18. Packaging according to Claim 17, **characterized in that** each of the layers a), a') and e) and, respectively, b) and d) is composed of the same type of resin.

19. Packaging according to any of Claims 1 to 18, **characterized in that** each of the backing layers g) and g'), identical or different, is composed of a thermoplastic resin , preferably a polyester, polyolefin or polyamide.

20. Packaging according to Claim 19, **characterized in that** the backing layers g) and g'), identical or different, are composed of foamed or amorphous polyester, preferably polyethylene terephthalate, of polyethylene or polypropylene.

21. Packaging according to Claim 19 or 20, **characterized in that** the backing layer g') of the multilayer film in the form of lid A) has been at least longitudinally orientated, preferably biaxially orientated.

22. Packaging according to any of Claims 1 to 21, **characterized in that** the packaging has at least a transparent lid A), preferably is entirely transparent.

## Revendications

1. Emballage pouvant être refermé pour marchandises diverses, de préférence, pour produits alimentaires, se composant
A) d'un couvercle fait d'une feuille multicouche soudable avec
a') une couche de scellage tournée vers le produit de remplissage et
g') une couche de support
et
B) d'une barquette d'emballage fabriquée à partir d'une feuille multicouche soudable avec
a) une couche de scellage tournée vers le produit de remplissage et
g) une couche de support
le couvercle A) étant relié à la barquette d'emballage B) par l'intermédiaire d'un joint de scellage dans la zone marginale de la barquette d'emballage B),
**caractérisé en ce que** seule la feuille multicouche, à partir de laquelle a été fabriquée, par thermoformage, la barquette d'emballage B), présente une structure de couches dirigée de l'intérieur de l'emballage vers l'extérieur, directement adjacente à la couche de scellage a), se composant
b) d'une couche d'agent promoteur de l'adhésion,
c) d'une couche barrière vis-à-vis de la migration faite d'au moins 75 % en poids de copolymère éthylène-alcool vinylique et ayant une épaisseur de couche < 2 µm et
f) d'une couche faite d'un adhésif sensible à la pression.

2. Emballage selon la revendication 1, **caractérisé en ce que** l'on dispose, entre la couche barrière vis-à-vis de la migration c) et la couche d'adhésif sensible à la pression f),
d) une couche d'agent promoteur de l'adhésion et/ou
e) au moins une couche faite d'homopolymères ou de copolymères oléfiniques.

3. Emballage selon la revendication 1 ou 2, **caractérisé en ce que** la couche barrière vis-à-vis de la migration c) se compose de copolymère éthylène-alcool vinylique.

4. Emballage selon la revendication 1 ou 2, **caractérisé en ce que** la couche barrière vis-à-vis de la migration c) se compose d'un mélange de 75 à 99 % en poids de copolymère éthylène-alcool vinylique et de 1 à 25 % en poids de copolymère éthylène-acétate de vinyle.

5. Emballage selon la revendication 4, **caractérisé en ce que** la couche barrière vis-à-vis de la migration c) se compose d'un mélange de 80 à 95 % en poids de copolymère éthylène-alcool vinylique et de 5 à 20 % en poids de copolymère éthylène-acétate de vinyle.

6. Emballage selon la revendication 4 ou 5, **caractérisé en ce que** le copolymère éthylène-acétate de vinyle est constitué de 2 à 35 % en moles d'acétate de vinyle.

7. Emballage selon l'une quelconque des revendications 1 à 6, **caractérisé en ce que** l'épaisseur de la couche barrière vis-à-vis de la migration c) est de 0,5 à < 2 µm, de préférence de 0,7 à 1,5 µm.

8. Emballage selon l'une quelconque des revendications 1 à 7, **caractérisé en ce que** la barquette d'emballage B a été fabriquée à partir de la feuille multicouche par emboutissage profond.

9. Emballage selon l'une quelconque des revendications 2 à 8, **caractérisé en ce que** l'épaisseur totale de la séquence de couches a) à e) est de 15 à 70 µm, de préférence de 20 à 50 µm, et particulièrement préférablement de 25 à 40 µm.

10. Emballage selon l'une quelconque des revendications 1 à 9, **caractérisé en ce que** le rapport de l'épaisseur de la couche barrière vis-à-vis de la migration c) à l'épaisseur totale de la feuille multicouche est de 1 :1000 à 1 :25, de préférence de 1 :100 à 1 :30.

11. Emballage selon l'une quelconque des revendications 1 à 10, **caractérisé en ce que** non seulement la couche de scellage a) mais aussi la couche de scellage a'), qu'elles soient identiques ou différentes, présentent, en tant que composant de polymère, au moins une polyoléfine, de préférence du polyéthylène, au moins un copolymère de l'éthylène, de préférence, un copolymère éthylène-acétate de vinyle ou un mélange des polymères cités.

12. Emballage selon la revendication 11, **caractérisé en ce que** les couches de scellage a) et a') présentent, en tant que composant de polymère, du LDPE, du HDPE, du LLDPE, du m-PE, tout particulièrement de préférence du LDPE, du copolymère éthylène-acétate de vinyle ou leur mélange.

13. Emballage selon la revendication 11 ou 12, **caractérisé en ce que** le composant de polymère de la couche de scellage a') est identique au composant de polymère de la couche de scellage a).

14. Emballage selon l'une quelconque des revendications 1 à 13, **caractérisé en ce que** la couche f) présente, en tant qu'adhésif sensible à la pression, un adhésif sensible à la pression à base d'une dispersion, sous forme de masse en fusion réticulable à chaud ou par rayonnement UV.

15. Emballage selon l'une quelconque des revendications 2 à 14, **caractérisé en ce que** la couche e) est constituée d'au moins une polyoléfine, de préférence d'un polyéthylène ou d'un copolymère de l'éthylène, de préférence d'un copolymère éthylène-acétate de vinyle ou d'un mélange des polymères cités.

16. Emballage selon la revendication 15, **caractérisé en ce que** la couche e) est constitué de LDPE, de HDPE, de LLDPE ou de m-PE ou d'un mélange d'au moins 2 des polyéthylènes cités ou d'un mélange d'au moins un des polymères cités avec un copolymère éthylène-acétate de vinyle, de préférence de LDPE, de copolymère éthylène-acétate de vinyle ou de leur mélange.

17. Emballage selon l'une quelconque des revendications 2 à 16, **caractérisé en ce que** la séquence de couches partielle a) à e) est constituée d'une manière symétrique par rapport à la couche barrière vis-à-vis de la migration c).

18. Emballage selon la revendication 17, **caractérisé en ce que** les couches a), a') et e) ou b) et d) sont constituées à chaque fois du même genre de matière synthétique.

19. Emballage selon l'une quelconque des revendications 1 à 18, **caractérisé en ce que** les couches de support g) et g'), qu'elles soient identiques ou différentes, se composent, à chaque fois, d'une matière synthétique thermoplastique, de préférence de polyester, de polyoléfine ou de polyamide.

20. Emballage selon la revendication 19, **caractérisé en ce que** les couches de support g) et g'), qu'elles soient identiques ou différentes, se composent d'un polyester alvéolaire ou amorphe, de préférence, de téréphtalate de polyéthylène, de polyéthylène ou de polypropylène.

21. Emballage selon la revendication 19 ou 20, **caractérisé en ce que** la couche de support g') de la feuille multicouche en tant que couvercle A) est étirée au moins d'une manière longitudinale, de préférence d'une manière biaxiale.

22. Emballage selon l'une quelconque des revendications 1 à 21, **caractérisé en ce que** l'emballage présente au moins un couvercle transparent A), de préférence entièrement transparent.
